# EUROPEAN PATENT APPLICATION

(11) **EP 4 194 406 A1**
(43) Date of publication of application: **14.06.2023**
(21) Application number: 21853982.3
(22) Date of filing: 26.03.2021
(51) Int. Cl.: C01G 53/00, H01M 4/485, H01M 4/505, H01M 4/525

(54) **ENVIRONMENT-FRIENDLY PRECURSOR AND PREPARATION METHOD THEREFOR, AND COMPOSITE OXIDE POWDER AND PREPARATION METHOD THEREFOR, AND APPLICATION**

(30) Priority: 04.08.2020 CN 202010771705
(71) Applicant: XTC New Energy Materials (Xiamen) Ltd., Xiamen, Fujian 361026 (CN)
(72) Inventor: MA, Yuefei, Xiamen, Fujian 361026 (CN); LIN, Yushu, Xiamen, Fujian 361026 (CN); YU, Kangjie, Xiamen, Fujian 361026 (CN)
(74) Representative: Hofmann, Andreas
(86) International application number: PCT/CN2021/083212
(87) International publication number: WO 2022/027981

(57) **Abstract**

The present invention belongs to the field of materials, and relates to an environment-friendly precursor, a composite oxide powder, and preparation methods and application thereof. The method for preparing an environment-friendly precursor provided in the present invention includes: subjecting a metal and/or a metal oxide, an oxidant, water, and a complexing agent to a chemical corrosion crystallization reaction at an electrical conductivity equal to or greater than 200 uS/cm, a redox potential ORP value equal to or less than 100 mv, and a complexing agent concentration of 3-50 g/L; after the reaction is completed, conducting magnetic separation on an obtained reaction product to obtain a magnetic particle and a slurry; then, conducting solid-liquid separation on the slurry to obtain a solid particle and a filtrate; and finally, washing and drying the solid particle. The precursor prepared by using the method provided in the present invention has advantages that no waste water is produced during dissolution and crystallization, and that water is constantly consumed, so that the purpose of environmental friendliness can be achieved. Moreover, the first charge and discharge efficiency of a lithium-ion battery can be effectively improved by means of the precursor.

## Description

### TECHNICAL FIELD

The present invention belongs to the field of materials, and relates to an environment-friendly precursor, a composite oxide powder, and preparation methods and application thereof.

### BACKGROUND TECHNOLOGY

With application of lithium-ion batteries to electric vehicles, cathode materials for the lithium-ion batteries have been widely concerned. Since the use and promotion of the electric vehicles are directly affected by properties of the cathode materials for the lithium-ion batteries, development of cathode materials for environment-friendly lithium-ion batteries with high capacity, high safety, long service life, and low cost is the main development direction in the future. At present, there are many kinds of vehicle-mounted cathode materials. Currently, lithium iron phosphate, multiple materials, and lithium manganate have all been applied in the electric vehicle (EV) field, and high-nickel materials have been successfully applied to the electric vehicles in batches by Panasonic of Japan and LG of South Korea. However, due to existing shortcomings, the multiple materials still need to be improved in safety performance, high capacity, high rate, long cycle performance, and other aspects.

With rapid development of the lithium-ion batteries, requirements for battery materials are increasing, especially for compositions of the materials and the uniformity of phase structures. Electrical properties of the batteries are directly affected by properties of the battery materials. Currently, in order to improve the properties of the materials, studies have been made to overcome structural defects of the materials by improving structural properties of precursors. Since the concentration of H⁺ in a solution at a pH of 6-12 is generally low, a redox reaction cannot occur by proton transfer with metal elements and/or metal oxides as raw materials. Therefore, metal hydroxide precursors cannot be prepared by using a traditional process with metal elements and/or metal oxides as raw materials. At present, methods for preparing precursors usually include a coprecipitation crystallization technology. Specifically, a metal salt solution and a hydroxide are mixed and added into an agitation reactor for mixed precipitation, and a large number of a sulfate is retained in a mother liquid after coprecipitation crystallization. Ammonia is added into a precipitation system to serve as a complexing agent, and the ammonia is finally retained in a reaction system in an ammonium salt. Solid-liquid separation is conducted to remove the mother liquid part containing the ammonia, the ammonium salt, and the sulfate from a solid precursor, and a part of heavy metals and small solid particles are also dissolved in the mother liquid. Therefore, according to the traditional coprecipitation crystallization technology, not only are large numbers of hydroxides, ammonia, and other materials consumed as required, but also large amounts of waste gas, waste water, and waste material are produced, so that a great burden on the environment is caused. In addition, a lithium-ion battery corresponding to a precursor obtained by using the traditional coprecipitation crystallization technology has low first charge and discharge efficiency, which still needs to be improved.

### DISCLOSURE OF THE INVENTION

In order to overcome the defects that a lithium-ion battery corresponding to a precursor obtained by using an existing coprecipitation crystallization method has low first charge and discharge efficiency and a great burden on the environment is caused, an objective of the present invention is to provide an environmentally-friendly precursor, a composite oxide powder, and preparation methods and application thereof, which can improve the first charge and discharge efficiency of a lithium-ion battery without causing a burden on the environment.

As mentioned above, since the concentration of H⁺ in a solution at a pH of 6-12 is generally low, a redox reaction cannot occur by proton transfer with metal elements and/or metal oxides as raw materials. Therefore, precursors cannot be prepared by using a traditional process with metal elements and/or metal oxides as raw materials. After deep studies, it has been found by the inventor of the present invention that when a metal and/or a metal oxide, an oxidant, water, and a complexing agent are put in a solution at an electrical conductivity equal to or greater than 200 uS/cm, a redox potential ORP value equal to or less than 100 mv, and a complexing agent concentration of 3-50 g/L, the mass transfer rate of the solution can be accelerated, and H⁺ can breakdown an interface film formed on the surface of the metal and/or the metal oxide, so that electron transfer is carried out on a liquid-solid interface film to cause electrochemical corrosion of the surface of the solid metal and/or the metal oxide, and the problem of a redox reaction which cannot be induced by a traditional chemical reaction is solved. Moreover, the primary particle morphology of particles can be refined, so that an internal structure of a precursor obtained is more uniform and consistent. After the precursor is sintered into a cathode material for a lithium-ion battery, the first charge and discharge efficiency is higher. On the basis of the above description, the present invention is completed.

Specifically, the present invention provides a method for preparing an environment-friendly precursor. The method includes: subjecting a metal and/or a metal oxide, an oxidant, water, and a complexing agent to a chemical corrosion crystallization reaction at an electrical conductivity equal to or greater than 200 uS/cm, a redox potential ORP value equal to or less than 100 mv, and a complexing agent concentration of 3-50 g/L; after the reaction is completed, conducting magnetic separation on an obtained reaction product to obtain a magnetic particle and a slurry; then, conducting solid-liquid separation on the slurry to obtain a solid particle and a filtrate; and finally, washing and drying the solid particle to obtain the precursor.

In the present invention, the metal and/or the metal oxide is converted into a corresponding metal hydroxide by the chemical corrosion crystallization reaction, that is, Me→Meⁿ⁺+ne, MeₓO_{y}→Meⁿ⁺+(n-2x/y)e. The oxidant and the water are used as raw materials to participate in an oxidation reaction of the metal and/or the metal oxide, and the quantities of the two substances are such that the metal and/or the metal oxide is converted into a corresponding metal hydroxide. The oxidant is added to create conditions for dissolution and coprecipitation of the metal and/or the metal oxide, and the metal and/or the metal oxide is dissolved and crystallized to obtain a metal hydroxide. During the chemical corrosion crystallization reaction, the water is used as a raw material to participate in the reaction, so that the metal and/or the metal oxide is converted into a hydroxide. During crystallization, the water is constantly consumed, and no excess waste water is produced, so that the purpose of environmental friendliness is achieved during crystallization.

Specific examples of the metal and/or the metal oxide include, but are not limited to: at least one of nickel, cobalt, manganese, aluminum, zirconium, tungsten, magnesium, strontium, and yttrium metal elements and metal oxides thereof, which may be arbitrarily adjusted from 0 to 100% according to actual needs. In addition, the metal and/or the metal oxide is preferably used in the form of an amorphous and loose powder, so that the reaction rate can be improved, and the reaction time can be shortened.

In a preferred embodiment, the metal and/or the metal oxide is cooperatively used in the following forms: Ni-Co-Mn-Zr-W, Ni-Mg-Zr-W, Co-AI-Mg-Ti, or Ni-Co-AI-Zr-Ti. In the Ni-Co-Mn-Zr-W, a molar ratio of Ni to Co to Mn to Zrto W is 1:(0.05-1):(0.1-1):(0-0.2):(0-0.2). In the Ni-Mg-Zr-W, a molar ratio of Ni to Mg to Zr to W is 1:(0.001-0.1):(0.001-0.1):(0.001-0.1). In the Co-AI-Mg-Ti, a molar ratio of Co to Al to Mg to Ti is 1:(0.001-0.1):(0.001-0.1):(0-0.1). In the Ni-Co-AI-Zr-Ti, a molar ratio of Ni to Co to Al to Zrto Ti is 1:(0.001-0.5):(0.001-0.1):(0-0.1):(0-0.1). When the Ni-Co-Mn-Zr-W or the Ni-Mg-Zr-W is used, a Li-ion battery corresponding to an obtained precursor has better high-temperature cycle performance and first charge and discharge efficiency. When the Co-AI-Mg-Ti is used, a lithium-ion battery corresponding to an obtained precursor has better high-voltage cycle performance. When the Ni-Co-AI-Zr-Ti is used, a Li-ion battery corresponding to an obtained precursor has better high-temperature cycle performance and high safety performance. In addition, in the above combinations, each metal may be used in the form of a metal element, a metal oxide, or a mixture of a metal element and a metal oxide.

Specific examples of the oxidant include, but are not limited to: at least one of nitric acid, oxygen, air, sodium chlorate, potassium permanganate, and hydrogen peroxide, preferably nitric acid. When the nitric acid is used as the oxidant, ammonia is produced in a reaction product. At this moment, the complexing agent is not required to add additionally or only required to add in a small amount to meet concentration needs.

The complexing agent is used for complexing metal ions formed by the chemical corrosion crystallization reaction to reduce supersaturation coefficients of the system. Specific examples of the complexing agent include, but are not limited to: at least one of ammonia, ammonium sulfate, ammonium chloride, ethylenediamine tetraacetic acid, and ammonium nitrate. The concentration of the complexing agent is 3-50 g/L, and for example, may be 3 g/L, 5 g/L, 10 g/L, 15 g/L, 20 g/L, 25 g/L, 30 g/L, 35 g/L, 40 g/L, 45 g/L, and 50 g/L.

The chemical corrosion crystallization reaction is carried out at an electrical conductivity equal to or greater than 200 uS/cm, preferably 200-50,000 uS/cm. For example, the electrical conductivity may be 200 uS/cm, 300 uS/cm, 400 uS/cm, 500 uS/cm, 600 uS/cm, 700 uS/cm, 800 uS/cm, 900 uS/cm, 1,000 uS/cm, 1,100 uS/cm, 1,200 uS/cm, 1,300 uS/cm, 1,400 uS/cm, 1,500 uS/cm, 1,600 uS/cm, 1,700 uS/cm, 1,800 uS/cm, 1,900 uS/cm, 2,000 uS/cm, 3,000 uS/cm, 4,000 uS/cm, 5,000 uS/cm, 10,000 uS/cm, 15,000 uS/cm, 20,000 uS/cm, 25,000 uS/cm, 30,000 uS/cm, 35,000 uS/cm, 45,000 uS/cm, and 50,000 uS/cm. When the chemical corrosion crystallization reaction is carried out at an electrical conductivity controlled in the above range, the mass transfer rate is accelerated, and H⁺ can break down an interface film formed on the surface of the metal and/or the metal oxide, so that a redox reaction is carried out smoothly, and the metal and/or the metal oxide is converted into a corresponding metal hydroxide. In addition, the electrical conductivity may be controlled by adding a salt into the reaction system. Specific examples of the salt include, but are not limited to: at least one of a sulfate, a chloride, and a nitrate of sodium and/or lithium, specifically at least one selected from sodium sulfate, sodium chloride, sodium nitrate, lithium sulfate, lithium chloride, and lithium nitrate.

The chemical corrosion crystallization reaction is carried out at a redox potential ORP value equal to or greater than 100 mv, preferably -1,000 mv to 100 mv. For example, the redox potential ORP value may be -1,000 mv, -900 mv, -800 mv, -700 mv, -600 mv, -500 mv, -400 mv, -300 mv, -200 mv, -100 mv, 0 mv, and 100 mv. When the redox potential ORP value is controlled in the above range, the electrochemical corrosion of the liquid-solid interface film can be achieved, and crystallization of a metal hydroxide is promoted. The redox potential ORP value can be controlled by controlling the electrical conductivity of the reaction system and the concentration of ammonia and/or ammonium. In the present invention, the redox potential ORP value is determined by using a Mettler-Toledo S220 multi-parameter tester.

The chemical corrosion crystallization reaction may be a continuous reaction or an intermittent reaction. In a preferred embodiment, during the chemical corrosion crystallization reaction, the stirring intensity is determined at an input power of 0.1-1.0 kw/m²·h, metal ions in the reaction system have a concentration of 1-30 g/L, the complexing agent has a concentration of 3-50 g/L, the pH value is 6-12, and the reaction is carried out at a temperature of 20-90°C for 10-150 h. The particle size of a precursor may be controlled to 2-30 µm by controlling the stirring intensity, the concentration of metal ions in the reaction system, the concentration of the complexing agent, the pH value, the reaction temperature and the like.

The magnetic separation may be intermittent magnetic separation or continuous magnetic separation. The magnetic separation is preferably conducted at an intensity of 100-5,000 Gas.

In a preferred embodiment, the method for preparing an environment-friendly precursor provided in the present invention further includes preferably returning all the magnetic particle, the filtrate, and washing water to the chemical corrosion crystallization reaction system, and supplementing water consumed during crystallization. At this moment, cyclic and closed use of all materials can be achieved, and no waste water is discharged during crystallization, so that environmental friendliness is achieved.

The present invention further provides an environment-friendly precursor prepared by the above method.

The present invention further provides a method for preparing a composite oxide powder. The method includes:
(1) preparing an environment-friendly precursor by the above method; and
(2) subjecting the environment-friendly precursor and a lithium source to mixing and calcination to obtain the composite oxide powder.

In a preferred embodiment, in step (2), a Li/Me molar ratio of the environment-friendly precursor to the lithium source is (0.9-1.3):1.

In a preferred embodiment, in step (2), the calcination is conducted at a temperature of 600-1,100°C for 5-40 h under an atmosphere of air or oxygen.

In a preferred embodiment, in step (2), the lithium source is at least one selected from lithium hydroxide, lithium acetate, lithium nitrate, lithium sulfate, and lithium bicarbonate.

The present invention further provides a composite oxide powder prepared by the above method.

The present invention further provides application of the composite oxide powder as a cathode material for a lithium-ion battery.

According to the present invention, a traditional coprecipitation crystallization technology of a metal salt solution and a hydroxide is broken. A precursor is prepared by a chemical corrosion crystallization reaction of a metal and/or a metal oxide, an oxidant, water, and a complexing agent at a specific electrical conductivity, a redox potential ORP value, and a complexing agent concentration. Due to the fine particle morphology and uniform and consistent internal structure of the precursor, a great foundation is laid for improvement of the first charge and discharge efficiency of a lithium-ion battery. In addition, the precursor prepared by using the method provided in the present invention has advantages that no waste water is produced during dissolution and crystallization, and that the water is constantly consumed, so that the purpose of environmental friendliness can be achieved.

### BRIEF DESCRIPTION OF THE DRAWINGS

FIG. 1 is a scanning electron microscope image of an environment-friendly precursor obtained in Example 1.
FIG. 2 is a scanning electron microscope image of a composite oxide powder obtained in Example 1.

### DESCRIPTION OF EMBODIMENTS

The present invention is described in detail below with examples.

### Example 1

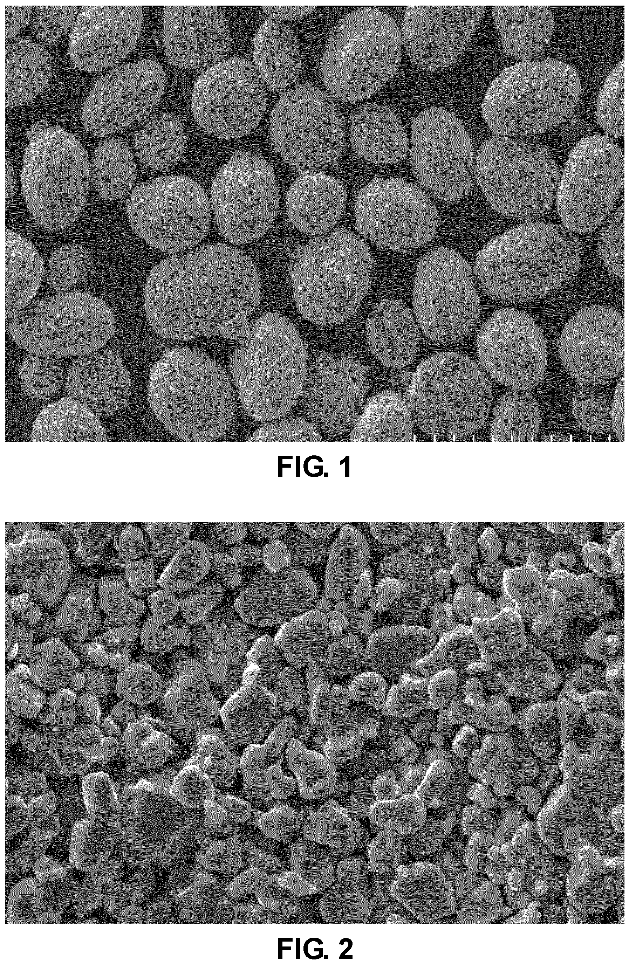

(1) A metal mixture (Ni, Co, Mn, Zr, and W five metals were mixed at a molar ratio of 1:1:1:0.03:0.05), nitric acid, highly pure water, and sodium sulfate were mixed at a molar ratio of 10:1:1:1, and then added into a reactor for a chemical corrosion crystallization reaction. Then, 10 g/L of ammonium sulfate was added. Under normal pressure conditions, the redox potential ORP value was controlled at -1,000 mv, the electrical conductivity was controlled at 200 uS/cm, the stirring input power was controlled at 1 kw/m³·h, the concentration of metal ions was controlled at 5 g/L, the pH value was controlled at 6-8, the reaction temperature was controlled at 20°C, and the residence time of the above materials in the reactor was controlled at 30 h. The water was constantly consumed during crystallization, and no excess waste water is produced. After the complete reaction, magnetic separation was conducted at an intensity of 100 Gas to obtain a magnetic particle and a slurry. The slurry was subjected to solid-liquid separation to obtain a solid particle and a filtrate. The solid particle was washed and dried to obtain a precursor. The magnetic particle, the filtrate, and washing water were returned to the reactor for a continuous reaction. The water consumed during crystallization was supplemented. A scanning electron microscope (SEM) image of the precursor is shown in FIG. 1. From FIG. 1, it can be seen that the precursor has uniform particle distribution, spherical morphology, and a loose and porous surface.
(2) The precursor and a lithium source were uniformly mixed at a Li/Me molar ratio of 1.08:1, and then calcined at 740°C for 12 h to finally obtain a composite oxide powder with Li/Me=1.08, which was recorded as QL-1. An SEM image of the composite oxide powder is shown in FIG. 2. From FIG. 2, it can be seen that the composite oxide powder obtained after sintering is a monocrystal product.

### Example 2

(1) A metal mixture (NiO, MgO, ZrO, and WO₃ four metals were mixed at a molar ratio of 1:0.005:0.006:0.004), nitric acid, highly pure water, and sodium chloride were mixed at a molar ratio of 10:1:1:2, and then added into a reactor for a chemical corrosion crystallization reaction. Then, 50 g/L of ethylenediamine tetraacetic acid was added. Under normal pressure conditions, the redox potential ORP value was controlled at 100 mv, the electrical conductivity was controlled at 500 uS/cm, the stirring input power was controlled at 0.7 kw/m³·h, the concentration of metal ions was controlled at 5 g/L, the pH value was controlled at 8-10, the reaction temperature was controlled at 60°C, and the residence time of the above materials in the reactor was controlled at 15 h. The water was constantly consumed during crystallization, and no excess waste water is produced. After the complete reaction, magnetic separation was conducted at an intensity of 5,000 Gas to obtain a magnetic particle and a slurry. The slurry was subjected to solid-liquid separation to obtain a solid particle and a filtrate. The solid particle was washed and dried to obtain a precursor. The magnetic particle, the filtrate, and washing water were returned to the reactor for a continuous reaction. The water consumed during crystallization was supplemented.
(2) The precursor and a lithium source were uniformly mixed at a Li/Me molar ratio of 1.06:1, and then calcined at 740°C for 20 h to finally obtain a composite oxide powder with Li/Me=1.06, which was recorded as QL-2.

### Example 3

(1) A metal mixture (Co, Al, Mg, and Ti four metals were mixed at a molar ratio of 1:0.01:0.004:0.005), nitric acid, highly pure water, and sodium nitrate were mixed at a molar ratio of 10:1:1:4, and then added into a reactor for a chemical corrosion crystallization reaction. Then, 30 g/L of ammonium nitrate was added. Under normal pressure conditions, the redox potential ORP value was controlled at -200 mv, the electrical conductivity was controlled at 1,000 uS/cm, the stirring input power was controlled at 0.1 kw/m³·h, the concentration of metal ions was controlled at 5 g/L, the pH value was controlled at 10-12, the reaction temperature was controlled at 90°C, and the residence time of the above materials in the reactor was controlled at 10 h. The water was constantly consumed during crystallization, and no excess waste water is produced. After the complete reaction, magnetic separation was conducted at an intensity of 2,000 Gas to obtain a magnetic particle and a slurry. The slurry was subjected to solid-liquid separation to obtain a solid particle and a filtrate. The solid particle was washed and dried to obtain a precursor. The magnetic particle, the filtrate, and washing water were returned to the reactor for a continuous reaction. The water consumed during crystallization was supplemented.
(2) The precursor and a lithium source were uniformly mixed at a Li/Me molar ratio of 1.06:1, and then calcined at 960°C for 20 h to finally obtain a composite oxide powder with Li/Me=1.06, which was recorded as QL-3.

### Example 4

(1) A metal mixture (Ni, Co, Al, Zr, and Ti five metals were mixed at a molar ratio of 1:0.12:0.15:0.01:0.012), nitric acid, highly pure water, and sodium sulfate were mixed at a molar ratio of 10:1:1:1, and then added into a reactor for a chemical corrosion crystallization reaction. Then, 30 g/L of ammonium chloride was added. Under normal pressure conditions, the redox potential ORP value was controlled at 100 mv, the electrical conductivity was controlled at 5,000 uS/cm, the stirring input power was controlled at 0.7 kw/m³·h, the concentration of metal ions was controlled at 5 g/L, the pH value was controlled at 6-8, the reaction temperature was controlled at 60°C, and the residence time of the above materials in the reactor was controlled at 15 h. The water was constantly consumed during crystallization, and no excess waste water is produced. After the complete reaction, magnetic separation was conducted at an intensity of 2,000 Gas to obtain a magnetic particle and a slurry. The slurry was subjected to solid-liquid separation to obtain a solid particle and a filtrate. The solid particle was washed and dried to obtain a precursor. The magnetic particle, the filtrate, and washing water were returned to the reactor for a continuous reaction. The water consumed during crystallization was supplemented.
(2) The precursor and a lithium source were uniformly mixed at a Li/Me molar ratio of 1.05:1, and then calcined at 790°C for 24 h to finally obtain a composite oxide powder with Li/Me=1.05, which was recorded as QL-4.

### Example 5

A precursor and a composite oxide powder were prepared according to the method in Example 1. The difference was that the metal raw material was changed from a mixture of Ni, Co, Mn, Zr, and W five metals to a mixture of Ni, Co, and Mn at a molar ratio of 1:1:1, other conditions were the same as those in Example 1, and a precursor and a composite oxide powder with Li/Me=1.08 were obtained. The composite oxide powder was recorded as QL-5.

### Example 6

A precursor and a composite oxide powder were prepared according to the method in Example 1. The difference was that the metal raw material was changed from a mixture of Ni, Co, Mn, Zr, and W five metals to a mixture of Ni, Co, and Mn at a molar ratio of 5:2:3, other conditions were the same as those in Example 1, and a precursor and a composite oxide powder with Li/Me=1.08 were obtained. The composite oxide powder was recorded as QL-6.

### Example 7

A precursor and a composite oxide powder were prepared according to the method in Example 1. The difference was that the metal raw material was changed from a mixture of Ni, Co, Mn, Zr, and W five metals to a mixture of Ni, Co, and Mn at a molar ratio of 10:1:1.5, other conditions were the same as those in Example 1, and a precursor and a composite oxide powder with Li/Me=1.08 were obtained. The composite oxide powder was recorded as QL-7.

### Example 8

A precursor and a composite oxide powder were prepared according to the method in Example 1. The difference was that the metal raw material was changed from a mixture of Ni, Co, Mn, Zr, and W five metals to a mixture of Ni and Co at a molar ratio of 4:1, other conditions were the same as those in Example 1, and a precursor and a composite oxide powder with Li/Me=1.08 were obtained. The composite oxide powder was recorded as QL-8.

### Example 9

A precursor and a composite oxide powder were prepared according to the method in Example 1. The difference was that the metal raw material was changed from a mixture of Ni, Co, Mn, Zr, and W five metals to a mixture of Ni and Mg at a molar ratio of 9.5:0.5, other conditions were the same as those in Example 1, and a precursor and a composite oxide powder with Li/Me=1.08 were obtained. The composite oxide powder was recorded as QL-9.

### Comparative Example 1

A precursor and a composite oxide powder were prepared according to the method in Example 5. The difference was that the ammonium sulfate was added in an amount of 1 g/L, other conditions were the same as those in Example 5, and a precursor and a composite oxide powder with Li/Me=1.08 were obtained. The composite oxide powder was recorded as DQL-1.

### Comparative Example 2

A precursor and a composite oxide powder were prepared according to the method in Example 5. The difference was that the molar ratio of the metal mixture to the nitric acid to the highly pure water to the sodium sulfate was changed from 10:1:1:1 to 10:1:1:0.5 to control the electrical conductivity of the system at 100 uS/cm, other conditions were the same as those in Example 5, and a precursor and a composite oxide powder with Li/Me=1.08 were obtained. The composite oxide powder was recorded as DQL-2.

### Comparative Example 3

A precursor and a composite oxide powder were prepared according to the method in Example 5. The difference was that the redox potential ORP value was controlled at 150 mv, and a precursor and a composite oxide powder with Li/Me=1.08 were obtained. The composite oxide powder was recorded as DQL-3.

### Test Example

(1) Properties of precursors:
   Results of the particle size, tap density, and consistency are shown in Table 1. The particle size and the consistency were determined by using a Malvern laser particle size analyzer.
(2) Electrochemical performance of lithium-ion batteries:
   The composite oxide powders obtained in Examples 1 to 9 and the reference composite oxide powders obtained in Comparative Examples 1 to 3 were separately used as a cathode material. The cathode material, conductive carbon black, and polyvinylidene fluoride (PVDF) were dissolved in an NMP solvent at a mass ratio of 80:10:10 under a vacuum condition to obtain a positive slurry with a solid content of 70% by weight. The positive slurry was spread on an aluminum foil current collector, dried at 120°C under vacuum for 12 h, and then punched to obtain a positive wafer with a diameter of 19 mm. Composite modified graphite, CMC, and SBR were dissolved in deionized water at a mass ratio of 90:5:5 under a vacuum condition to obtain a negative slurry with a solid content of 40% by weight. The negative slurry was spread on a copper foil current collector, dried at 100°C under vacuum for 12 h, and then punched to obtain a negative wafer with a diameter of 19 mm. A ratio of a negative capacity to a positive capacity was 1.1:1. A battery was assembled in a glove box filled with argon in the following sequence: a positive shell, a positive plate, a diaphragm, a negative plate, a stainless steel plate, a spring plate, and a negative shell. 1 mol/L of a mixture of LiPF₆/EC and DMC (at a volume ratio of 1:1) supplemented with 10% (by volume fraction) fluoroethylene carbonate (FEC) was used as an electrolyte, a polypropylene microporous membrane was used as the diaphragm, and lithium-ion batteries C1-C9 and reference lithium-ion batteries DC1-DC3 were obtained. The first discharge performance of the lithium-ion batteries C1-C9 and reference lithium-ion batteries DC1-DC3 was tested, and results are shown in Table 1.

**Table 1**

| Number | Serial number | D10 (µm) | D50 (µm) | D90 (µm) | Tap density (µm) | Consistency | First discharge performance |
|---|---|---|---|---|---|---|---|
| Example 1 | QL-1 | 2.14 | 4.04 | 8.4 | 2.35 | 0.45 | 162mAh/g |
| Example 2 | QL-2 | 4.70 | 9.80 | 18.9 | 2.67 | 0.41 | 228mAh/g |
| Example 3 | QL-3 | 4.90 | 14.6 | 35.6 | 2.91 | 0.48 | 193mAh/g |
| Example 4 | QL-4 | 5.00 | 10.4 | 19.7 | 2.59 | 0.43 | 218mAh/g |
| Example 5 | QL-5 | 2.24 | 4.12 | 6.6 | 2.34 | 0.31 | 160mAh/g |
| Example 6 | QL-6 | 2.24 | 3.89 | 8.1 | 2.37 | 0.41 | 171mAh/g |
| Example 7 | QL-7 | 2.14 | 4.04 | 7.1 | 2.23 | 0.45 | 214mAh/g |
| Example 8 | QL-8 | 1.10 | 3.13 | 8.5 | 2.34 | 0.46 | 210mAh/g |
| Example 9 | QL-9 | 2.14 | 4.04 | 6.1 | 2.23 | 0.45 | 214mAh/g |
| Comparative Example 1 | DQL-1 | 4.40 | 7.90 | 13.7 | 2.48 | 0.41 | 156mAh/g |
| Comparative Example 2 | DQL-2 | 3.20 | 6.80 | 15.5 | 2.55 | 0.42 | 154mAh/g |
| Comparative Example 3 | DQL-3 | 2.34 | 4.34 | 8.9 | 2.45 | 0.45 | 157mAh/g |

Although the examples of the present invention have been illustrated and described above, it may be understood that the above examples are exemplary and should not be understood as a limitation of the present invention. Changes, modifications, substitutions, and variations may be made by those of ordinary skill in the art to the above examples within the scope of the present invention without departing from the principle and purpose of the present invention.

## Claims

1. A method for preparing an environment-friendly precursor, comprising: subjecting a metal and/or a metal oxide, an oxidant, water, and a complexing agent to a chemical corrosion crystallization reaction at an electrical conductivity equal to or greater than 200 uS/cm, a redox potential ORP value equal to or less than 100 mv, and a complexing agent concentration of 3-50 g/L; after the reaction is completed, conducting magnetic separation on an obtained reaction product to obtain a magnetic particle and a slurry; then, conducting solid-liquid separation on the slurry to obtain a solid particle and a filtrate; and finally, washing and drying the solid particle to obtain the precursor.

2. The method for preparing an environment-friendly precursor according to claim 1, wherein the quantities of the oxidant and the water are such that the metal and/or the metal oxide is converted into a corresponding metal hydroxide.

3. The method for preparing an environment-friendly precursor according to claim 1, wherein the metal and/or the metal oxide is at least one selected from nickel, cobalt, manganese, aluminum, zirconium, tungsten, magnesium, strontium, and yttrium metal elements and metal oxides thereof.

4. The method for preparing an environment-friendly precursor according to claim 1, wherein the metal and/or the metal oxide is Ni-Co-Mn-Zr-W, Ni-Mg-Zr-W, Co-AI-Mg-Ti, or Ni-Co-AI-Zr-Ti.

5. The method for preparing an environment-friendly precursor according to claim 1, wherein the oxidant is at least one selected from nitric acid, oxygen, air, sodium chlorate, potassium permanganate, and hydrogen peroxide.

6. The method for preparing an environment-friendly precursor according to claim 1, wherein the complexing agent is at least one selected from ammonia, ammonium sulfate, ammonium chloride, ethylenediamine tetraacetic acid, and ammonium nitrate.

7. The method for preparing an environment-friendly precursor according to claim 1, wherein the electrical conductivity is 200-50,000 uS/cm.

8. The method for preparing an environment-friendly precursor according to claim 1, wherein the electrical conductivity is controlled by adding a salt into the reaction system, and the salt is at least one selected from a sulfate, a chloride, and a nitrate of sodium and/or lithium.

9. The method for preparing an environment-friendly precursor according to claim 1, wherein the chemical corrosion crystallization reaction is a continuous reaction or an intermittent reaction.

10. The method for preparing an environment-friendly precursor according to claim 1, wherein during the chemical corrosion crystallization reaction, the stirring intensity is determined at an input power of 0.1-1.0 kw/m²·h, metal ions in the reaction system have a concentration of 1-30 g/L, the complexing agent has a concentration of 3-50 g/L, the pH value is 6-12, and the reaction is carried out at a temperature of 20-90°C for 10-150 h.

11. The method for preparing an environment-friendly precursor according to claim 1, wherein the magnetic separation is intermittent magnetic separation or continuous magnetic separation at an intensity of 100-5,000 Gas.

12. The method for preparing an environment-friendly precursor according to claim 1, wherein the method further comprises returning all the magnetic particle, the filtrate, and washing water to the chemical corrosion crystallization reaction system, and supplementing water consumed during crystallization.

13. An environment-friendly precursor prepared by the method according to any one of claims 1 to 12.

14. A method for preparing a composite oxide powder, comprising:
(1) preparing an environment-friendly precursor by the method according to any one of claims 1 to 12; and
(2) subjecting the environment-friendly precursor and a lithium source to mixing and calcination to obtain the composite oxide powder.

15. The method for preparing a composite oxide powder according to claim 14, wherein in step (2), a Li/Me molar ratio of the environment-friendly precursorto the lithium source is (0.9-1.3):1.

16. The method for preparing a composite oxide powder according to claim 14, wherein in step (2), the calcination is conducted at a temperature of 600-1,100°C for 5-40 h under an atmosphere of air or oxygen.

17. The method for preparing a composite oxide powder according to claim 14, wherein in step (2), the lithium source is at least one selected from lithium hydroxide, lithium acetate, lithium nitrate, lithium sulfate, and lithium bicarbonate.

18. A composite oxide powder prepared by the method according to any one of claims 14 to 17.

19. Application of the composite oxide powder according to claim 18 as a cathode material for a lithium-ion battery.
